# EUROPÄISCHE PATENTSCHRIFT

(11) **EP 1 153 214 B1**
(45) Veröffentlichungstag und Bekanntmachung des Hinweises auf die Patenterteilung: **06.08.2003**
(21) Anmeldenummer: 00904840.6
(22) Anmeldetag: 13.01.2000
(51) Int. Cl.: F02K 9/48, F02K 9/52

(54) **EINRICHTUNG ZUR TREIBSTOFFZUFUHR FÜR EIN RAKETENTRIEBWERK UND WÄRMETAUSCHER ZUR VERWENDUNG IN DER EINRICHTUNG**
DEVICE FOR SUPPLYING FUEL FOR A ROCKET PROPULSION UNIT AND HEAT EXCHANGER TO BE USED IN SAID DEVICE
DISPOSITIF D'ALIMENTATION EN CARBURANT POUR PROPULSEUR DE FUSEE ET ECHANGEUR THERMIQUE POUR UTILISATION DANS LEDIT DISPOSITIF

(30) Priorität: 29.01.1999 DE 19903664
(43) Veröffentlichungstag der Anmeldung: 14.11.2001
(73) Patentinhaber: Astrium GmbH, 81663 München (DE)
(72) Erfinder: KRETSCHMER, Joachim, D-82340 Feldafing (DE)
(86) Internationale Anmeldenummer: DE0000100
(87) Internationale Veröffentlichungsnummer: WO00045041

(56) Entgegenhaltungen:
- GB-A- 845 025
- US-A- 3 049 870
- US-A- 4 583 362
- US-A- 5 410 874

## Beschreibung

Die Erfindung betrifft eine Einrichtung zur Treibstoffzufuhr für ein Raketentriebwerk, insbesondere für ein Raketentriebwerk, das auf der Verbrennung von Wasserstoff und Sauerstoff im Expanderkreislauf basiert, sowie einen Wärmetauscher zur Verwendung in der Einrichtung zur Treibstoffzufuhr.

Zur Einspritzung von Wasserstoff und Sauerstoff in die Schubkammer einer Rakete muß der in Tanks befindliche Treibstoff, z.B. Wasserstoff und Sauerstoff, mit hohem Druck geregelt zugeführt werden. Dabei wird der Wasserstoff über Regelventile zunächst in den Bereich außerhalb der Schubkammer geleitet, so daß einerseits der Wasserstoff eine Kühlung der Brennkammerwand bewirkt und andererseits beim Expanderkreislauf der Wasserstoff selbst auf Grund der Wärme, die durch die Verbrennungsvorgänge in der Brennkammer entsteht, für die spätere Expansion in Turbinen aufgeheizt wird. Mit einer entsprechenden Temperatur des Wasserstoff kann dieser Turbinen antreiben, die wiederum den Antrieb von Pumpen zur Zuführung von Wasserstoff und Sauerstoff an die Einspritzelemente mit ausreichendem Druck bewirken. Um einen möglichst hohen Brennkammerdruck im Raketentriebwerk zu erreichen, besteht die Anforderung an derartige Einrichtungen, deren Arbeitsweise effizienter zu gestalten.

Aus dem Stand der Technik ist aus US 3,049,870, US 5,410,874 und US 4,583,362 bekannt, einen Wärmetauscher bei einem Raketentriebwerk vorzusehen, in dem der von den Turbinen kommende Treibstoff mir einem von einer Pumpe kommenden Treibstoff in Wärmeaustausch steht, um eine weitere Aufheizung des Treibstoffs zu erreichen. Problematisch bei diesem Stand der Technik ist jedoch, das trotz der zusätzlichen Aufheizung unter Umständen noch nicht die gewünschten Brennkammerdrücke erreichbar sind und außerdem die Anordnung relativ platzaufwendig gestaltet ist

Die Aufgabe der Erfindung ist es daher, eine optimierte Anordnung für eine Einrichtung zur Treibstoffzufuhr für ein Raketentriebwerk mit Expanderkreislauf bereitzustellen, die einen Wärmetauscher beinhaltet und die insgesamt effizienter arbeitet und den Brennkammerdruck für Raketentriebwerke erhöht.

Diese Aufgabe wird mit den Merkmalen des unabhängigen Anspruchs 1 gelöst. Alternative Ausführungsformen sind in den Unteransprüchen angegeben.

Die Erfindung wird im folgenden anhand der beigefügten Figuren 1-3 beschrieben, die zeigen:
- Fig. 1: ein Raketentriebwerk mit Expanderkreislauf nach dem Stand der Technik,
- Fig. 2: die erfindungsgemäße Einrichtung zur Treibstoffzufuhr mit einem Wärmetauscher und
- Fig. 3: eine schematische Schnittdarstellung der Ausführungsform des erfindungsgemäßen Wärmetauschers nach der Fig. 2, wobei der Wärmetauscher im Gegensatz zur Darstellung der Fig. 2 im Einspritzkopf angeordnet und mit den Einspritzelementen der Brennkammer integriert ist.

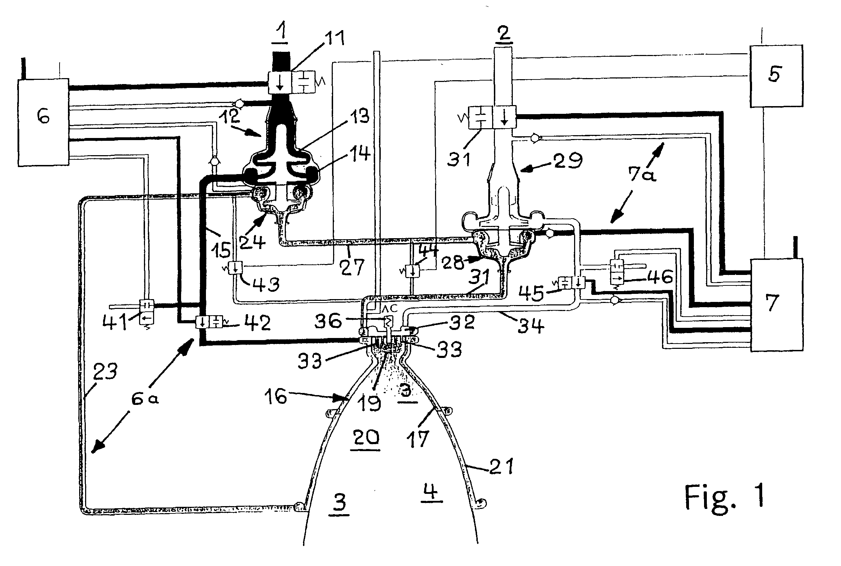

Die Fig. 1 zeigt eine Einrichtung zur Treibstoffzufuhr nach dem Stand der Technik. Diese ist zwischen einem Wasserstofftank 1 und einem Sauerstofftank 2 auf der einen Seite sowie einer Schubkammer 3 auf der anderen Seite angeordnet. Die Einrichtung zur Treibstoffzufuhr wird von einem zentralem Regler 5 geregelt, der wiederum über entsprechende Leitungen einen Wasserstoffregler 6 zur Regelung des Wasserstoffkreislaufs 6a und einen Sauerstoffregler 7 zur Regelung eines Sauerstoffkreislaufs 7a ansteuert. Der Wasserstoffregler 6 steuert ein Tankventil (isolation valve) 11 an, mit dem die Zufuhr von flüssigem Wasserstoff aus dern Wasserstofftank 1 an eine Wasserstoffpumpe 12 bewirkt oder verhindert wird. Die Wasserstoffpumpe 12 ist in der Ausführungsform nach der Fig. 1 als zweistufige Pumpe ausgeführt und umfaßt demenstprechend einen ersten Satz Flügelräder 13 und einen zweiten Satz Flügelräder 14, um den Wasserstoff mit Druck zu beaufschlagen. Der Wasserstoff verläßt die Wasserstoffpumpe 12 über eine Leitung 15, durch die der Wasserstoff den Kühlkanälen 16 zugeführt wird. Die Kühlkanäle 16 verlaufen im wesentlichen in axialer Richtung zumindest im Bereich der Brennkammenwand 17, die den Brennraum 19 und den ersten Teil der Expansionsdüse 20 umgrenzt, sowie zum Teil auch im Bereich einer Düsenverlängerungswand 21. In diesen Bereichen dient der Wasserstoff der Kühlung der entsprechenden Wände. Gleichzeitig wird der Wasserstoff erwärmt. AnschlieBend wird der Wasserstoff über eine Leitung 23 der Turbine 24 zugeführt, die die Wasserstoffpumpe 12 antreibt. Der Wasserstoff gelangt über einen Verteiler (manifold) in den Bereich eines Turbinenlaufrads 25, das mit den Flügelrädern 13, 14 der Wasserstoff-Pumpe 12 in Verbindung steht. Der Wasserstoff, der durch seine Aufheizung eine erhöhte Temperatur erhalten hat, treibt dadurch die Turbine 24 und somit die Wasserstoffpumpe 12 an.

Der Antrieb der Turbine 24 bewirkt einen Druck- und Temperaturabfall im Wasserstoff, der über eine Leitung 27 der Turbine 28 einer Sauerstoffpumpe 29 zugeführt wird. Die Turbine 28 treibt die Sauerstoffpumpe 29 an, wodurch Sauerstoff aus den Sauerstoff-Tank 2 bei einem geöffneten Tankventil (isolation valve), das der Sauerstoffpumpe 29 zugeordnet ist, dieser zuführt. Der Wasserstoff erfährt durch den Antrieb der Turbine 28 einen weiteren Druck- und Temperaturabfall und wird anschließend über eine Leitung 31 dem Einspritzropf 32 mit Einspritzelementen 33 zugeführt. Andererseits gelangt der mittels der Sauerstoffpumpe 29 bedrückte Sauerstoff über eine Leitung 34 von der Pumpe 29 ebenfalls zu dem Einspritzropf 32. Von dem Einspritzropf 32 aus erstreckt sich die aus Einspritzropf 32, Brennkammer 17 und Düsenverlängerung 21 gebildete Schubkammer. Der flüssige Sauerstoff und der flüssige Wasserstoff gelangen also auf verschiedenen Wegen über Einspritzelemente 33 in die Brennkammer. Das Wasserstoff-Sauerstoffgemisch wird durch einen Zünder 36 gezündet, um den Antrieb der Rakete zu bewirken. Die Regelung des Wasserstoffkreislaufs 6a erfolgt über Ventile 42, 43, die vom Wasserstoffregler 6 angesteuert werden. Der Sauerstoffkreislauf 7a wird über Ventile 44, 45, geregelt, die teilweise vom zentralen Regler 5 und teilweise vom Sauerstoffregler 7 angesteuert werden.

Bei der Kraftstoffzufuhr-Einrichtung nach dem Stand der Technik wird also der in der Schubkammerwand 17und 21 erwärmte Wasserstoff den Turbinen 24, 28 zum Antrieb der jeweiligen Pumpen 12, 29 zugeführt. Anschließend gelangt der Wasserstoff direkt zum Einspritzropf 32, um durch diesen der Verbrennung im Brennraum 19, 20 zugeführt zu werden.

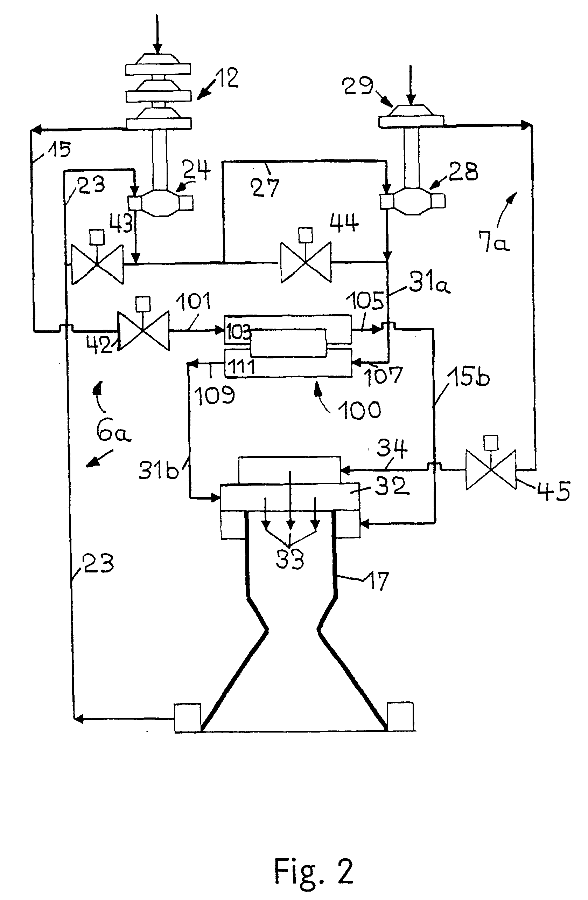

Die Fig. 2 zeigt die erfindungsgemäße Einrichtung zur Treibstoffzufuhr. Elemente dieser Darstellung bzw. Komponenten der Einrichtung, die in ihrer Funktion mit Elementen der Fig. 1 bzw. des dort dargestellten Stands der Technik übereinstimmen oder diesen ähnlich sind, sind in der Fig. 2 mit denselben Bezugszeichen bezeichnet Die Verbindung der in der Fig. 2 dargestellten Regelventile zu den entsprechenden Steuereinheiten sowie die Steuereinheiten selbst sind in der Fig. 2 nicht dargestellt.

Der von der Wasserstonffpumpe 12 über die Leitung 15 abgeführte Wasserstoff gelangt nicht direkt in den Bereich der Schubkammerwand 17, sondern wird zunächst einem Wärmetauscher 100 zugeführt. Um die Menge des diesem zugeführtem Wasserstoffs zu steuern, ist zwischen der Wasserstoffpumpe 12 und dem Wärmetauscher 100 das Regelventil 42 vorgesehen. Der Wärmetauscher 100 weist eine Eintrittsleitung 101 für den Wasserstoff, der von der Wasserstoffpumpe 12 kommt, auf. Nach dem Durchströmen eines ersten Wärmetauscherraumes 103, in dem diesen erwärmt wird, strömt der Wasserstoff durch eine erste Austrittsleitung 105 aus dem Wärmetauscher 100 aus. Von dort wird der Wasserstoff über eine Leitung 15b in den Bereich des Einspritzropfes 32 geführt, von wo aus er in die Kühlkanäle (nicht gezeigt) der Brennkammerwand 17 gelangt. Die Kühlkanäle verlaufen vorzugsweise in axialer Richtung in der Brennkammerwand 17. Dadurch wird einerseits die Brennkammerwand 17 während der Verbrennungsvorgänge gekühlt und andererseits der Wasserstoff mit höherer Temperatur beaufschlagt, um die Turbine 24 der Wassertstoffpumpe 12 und die Turbine 28 der Sauerstoff-Pumpe 29 anzutreiben. Die Pumpendrücke sind ausreichend hoch, um Verluste anderer Verbraucher, wie z.B. der Einspritz-Elemente 33, der Rohrleitungen oder der Kühlkanäle zu überwinden und letztendlich einen ausreichenden Druck für den Einspritz-Vorgang aufzuweisen, der in vorbestimmter Weise größer als der Brennkammerdruck sein muß.

Von den Kühlkanälen gelangt der Wasserstoff über die Leitung 23 zur Turbine 24, um die Wasserstoffpumpe 12 anzutreiben. Von dort gelangt der Wasserstoff über eine Leitung 27 zur Turbine 28 der Sauerstoffpumpe 29. Im Gegensatz zu dem in der Fig. 1 dargestelltem Gegenstand gelangt der Wasserstoff von der Turbine 28 nicht direkt zum Einspritzropf 32, sondern zunächst über eine Leitung 31a und eine zweite Eintrittsleitung 107 zum Wärmetauscher 100. Der Wasserstoff tritt über eine zweite Austrittsleitung 109 aus dem Wärmetauscher 100 aus und wird über eine Leitung 31b dem Einspritzropf 32 zugeführt. Nach dem Eintritt des Wasserstoffs durch die zweite Eintrittsleitung 107 in den Wärmetauscher 100 durchströmt der Wasserstoff einem zweiten Wärmetauscherraum 111.

Im Wärmetauscher 100 wird durch Wärmeübertragung Wärme von dem in den Kühlkanälen der Schubkammerwand 17 aufgeheizten Wasserstoff, der durch die zweite Eintrittsleitung 107 in den Wärmetauscher 100 gelangt, auf den von der Wasserstoffpumpe 12 kommenden, den ersten Wärmetauscherraum 103 durchströmenden und nachfolgend den Kühlkanälen zuzuführenden Wasserstoff übertragen. Dadurch erhält der den ersten Wärmetauscherraum 103 über die erste Austrittsleitung 105 verlassende, und damit den Kühlkanälen zugeführte Wasserstoff eine höhere Temperatur als es in dem in der Fig. 1 gezeigten Gegenstand nach dem Stand der Technik vorgesehen ist. Die Kühlung der Schubkammerwand 17 erfolgt dadurch zwar bei einem im Vergleich zum Stand der Technik höheren Betriebspunkt d.h. bei einer höheren Temperatur des Wasserstoffs. Der geforderte Kühleffekt kann jedoch mit einer entsprechenden Auslegung der Kühlkanäle kompensiert werden. Der Wasserstoff verläßt die Kühlkanäle durch die Leitung 23 und weist dabei eine höhere Temperatur als beim Stand der Technik auf. Der in den Kühlkanälen erwärmte Wasserstoff gibt beim Durchströmen des zweiten Wärmetauscherraums 111 Wärme an den den ersten Wärmetauscherraum 103 durchströmenden Wasserstoff ab, der anschließend dem Einspritzropf 32 zur Verbrennung mit Sauerstoff zugeführt wird.

Der Wasserstoff hat nach Austritt aus den Kühlkanälen eine höhere Temperatur als beim Stand der Technik. Dadurch wird die in die Turbine 24,28 eingebrachte Energie größer als beim Stand der Technik, so daß mit der Erhöhung der Pumpleistung der Pumpen 12, 29 ein höherer Brennkammerdruck erreicht wird und damit das gesamte Raketentriebwerk mit einem besseren spezifischen Impuls arbeitet.

Bei dem in der Fig. 2 dargestellten Gegenstand sind die Regelventile 42, 43, 44, 45 für den Wasserstoffkreislauf 6a und den Sauerstoffkreislauf 7a ähnlich angeordnet wie beim Stand der Technik. Die Leitungs- bzw. Ventilanordnung kann auch in anderen Varianten realisiert sein. Wesentlich ist dabei, daß der Wärmetauscher 100 einen Treibstoff, der vor dem Einspritzen zur Kühlung und zum Antrieb von Turbinen vorgesehen ist, vorwärmt, um die Turbinen bei einem höheren Energieniveau zu betreiben.

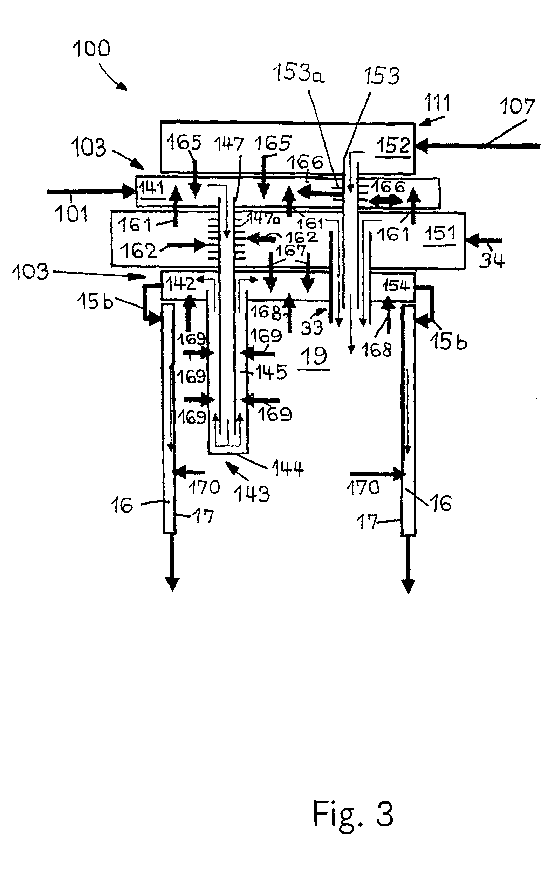

Der Wärmetauscher 100 ist am Einspritzkopf 32 angeordnet oder mit diesem zu einer Einheit oder Anordnung integriert. Dies ist in der Fig. 3 schematisch dargestellt.

Der kalte Wasserstoff, der über die erste Eintrittsleitung 101 in den Wärmetauscher 100 gelangt, durchströmt also den ersten Wärmetauscherraum 103 und verläßt diesen über die Leitung 15b. Der erste Wärmetauscherraum 103 kann, wie in der Fig. 3 dargestellt, mehrere Teilräume umfassen. So kann der erste Wärmetauscherraum 103 einen Teilraum 141, einen Teilraum 142 und zusätzlich einen Wärmetauschfinger 143 oder eine Kombination derselben umfassen. Eine Verbindungsleitung 147 verbindet das Innere des ersten Teilraums 141 mit dem Inneren des zweiten Teilraums 142, von wo aus der Wasserstoff den ersten Wärmetauscher-Raum 103 über die erste Austrittsleitung 15b verläßt.

In der Fig. 3 ist beispielhaft ein Einspritzelement 33 zum Einspritzen von Wasserstoff in die Brennkammer 19 dargestellt. Für den Fall, daß der Wärmetauscher 100 am oder im Einspritzkopf 32 angeordnet ist, können die Wärmetausch-Finger 143 vorgesehen sein. Diese sind vorzugsweise so angeordnet, daß sie von dem zweiten Teilraum 142 in die Brennkammer 19 hineinragen. In einer vorteilhaften Ausgestaltung des Wärmetauscher 100 erstreckt sich dabei die Verbindungsleitung147 durch das Innere des zweiten Teilraums 142 hindurch und in den Wärmetauschfinger 143 bis nahe des geschlossenen Endes 144 desselben hinein. Im Bereich des geschlossenen Endes 144 verläßt der zunächst in der Verbindungsleitung 147 geführte Wasserstoff die Verbindungsleitung 147 und gelangt in den Raum 145 zwischen der Außenkontur der Verbindungsleitung 147 und der Innenkontur des Wärmetauschfingers 143. In dem Raum 145 fließt der Wasserstoff in der Richtung zurück, die der Richtung entgegengesetzt ist, in der der Wasserstoff in der Verbindungsleitung 147 fließt. Aus dem Raum 145 gelangt der Wasserstoff in den zweiten Teilraum 142, um diesen durch eine oder mehrere Austrittsleitungen 15b zu verlassen. Von dort gelangt der Wasserstoff über die Leitung 15b in die Kühlkanäle 16. Nach dem Stand der Technik können mehrere Kühlkanäle 16 so angeordnet sein, daß der Wasserstoff in der Brennkammerwand 17 im Gegenstromverfahren, d.h. in entgegengesetzter Richtung zu den Brenngasen verläuft.

Der über die zweite Eintrittsleitung 107 dem Wärmetauscher 100 zugeführte warme Wasserstoff gelangt in den zweiten Wärmetauscher-Raum 111, der wiederum aus mehreren Teilräumen gebildet sein kann. In der Ausführungsform nach der Fig. 3 umfaßt der zweite Wärmetauscherraum 111 nur einen Raum 152.

Von dem Raum 152 gelangt der warme Wasserstoff zu den Einspritzelementen 33. Hierzu sind Verbindungsleitungen 153 vorgesehen, die von dem Raum 152 zu den Einspritzelementen 33 führen. Die Verbindungsleitungen 153 können direkt in das jeweilige Einspritzelement 33 übergehen. Auch kann bei einer Anordnung nach der Fig. 3 die Verbindungsleitung 153 die beiden Teilräume 141, 142 des ersten Wärmetauscherraums 103 sowie den Sauerstoffraum 151 durchragen.

Der flüssige Sauerstoff von der Pumpe 29 tritt über die Leitung 34 in den Raum 151 ein. Seine Temperatur ist mit ca. 100 K höher als die des kalten Wasserstoffes in Raum 103, der ca. 45 K mißt. Deshalb fließen Warmströme 161, 162 und 167 vom wärmeren Sauerstoff in Raum 151 an den kälteren Wasserstoff in Raum 103 bzw. den Teilräumen 141 und 142 sowie durch die Wände der Rohre 147 mit ggf. angeordneten Wärmetauschrippen an den dort geführten Wasserstoff.

Die in der Fig. 3 gezeigten Teilräume 141, 142 sowie 151, 152 können teilweise auch rotationssymmetrisch ausgeführt sein. Weiterhin können die Verbindungsleitungen 147, 153 auch mit Wärmetauschrippen 147a bzw. 153a versehen sein. Derartige Wärmetauschrippen können auch an anderen Stellen des Wärmetauschers 100 vorgesehen sein. Vorzugsweise sind dabei die Wärmetauschrippen 147a im Bereich des Sauerstoffraums 151 angeordnet, während die Wärmetauschrippen 153a vorzugsweise im Bereich des ersten Teilraums 141 des ersten Wärmetauscherraums 103 sind.

Der Sauerstoffraum 151 ist vorzugsweise zwischen dem ersten Teilraum 141 und dem zweiten Teilraum 142 des ersten Wärmetauschenraums 103 gelegen. Dabei sind deren Konturflächen so zueinander angeordnet, daß ein Wärmeübergang 161 von dem ersten Sauerstoffraum 151 zu dem ersten Teilraum 141 stattfindet. Weiterhin erfolgt ein Wärmeübergang 162 von dem Sauerstoffraum 151 in das Innere der Verbindungsleitung 147, die mit dem Inneren des ersten Teilraums 141 in Verbindung steht

In der Anordnung nach der Fig. 3 erfolgt weiterhin ein Wärmeübergang 165 von dem zweiten Wärmetauscherraum 111 zu dem ersten Teilraum 141 des ersten Wärmetauscherraums 103. Vom Inneren der Leitung 153 findet ferner ein Wärmeübergang 166 zu dem ersten Teilraum 141 statt.

Von dem Sauerstoffraum 151 erfolgt weiterhin ein Wärmeübergang 167 zu dem zweiten Teilraum 142 des ersten Wärmetauscherraums 103. Von der Brennkammer 19 erfolgt bei der Anordnung der Fig. 3 zum einen ein Wärmeübergang 168 in Richtung zum Inneren des Teilraums 142 und Wärmeübergang 169 zu dem Raum 145 der Wärmetauschfinger 143, sowie ein Wärmeübergang 170 durch die Brennkammerwand an den Wasserstoff in den Kühlkanälen 16.

Der Wärmetauscher 100 nach der in der Fig. 3 dargestellten Ausführungsform ermöglicht also eine Erwärmung des über die Leitung 15 und die erste Eintrittsleitung 101 von der Wasserstoffpumpe 12 kommenden Brennstoffs auf Grund der Wärmeübergänge 161, 162, 168, 169 in dem ersten Wärmetauscherraum 103, von wo der Brennstoff zu den Kühlkanälen 16 gelangt. Der Brennstoff hat also beim Eintritt in die Kühlkanäle 16 eine höhere Temperatur als beim Stand der Technik. Deshalb verläßt der Brennstoff die Kühlkanäle 16 über die Leitung 23 ebenfalls mit einer höheren Temperatur als beim Stand der Technik, so daß mehr Energie zum Betreiben der Verbraucher der Treibstoffzufuhreinrichtung zur Verfügung steht. Dadurch kann ein höherer Brennkammerdruck erzielt werden, der einen besseren spezifischen Impuls ermöglicht.

Die Erfindung wurde für ein Raketentriebwerk mit den beiden Treibstoffen Wasserstoff und Sauerstoff beschrieben. Die Erfindung kann jedoch auch allgemein für einen ersten und zweiten Treibstoff und sogar auch für weitere Treibstoffe verwendet werden. Wichtig ist nur, daß der Treibstoff, der zum Antrieb der Turbinen vorgesehen ist, durch Wärmetausch mit den Treibstoffen die unmittelbar eingespritzt werden, höher aufgeheizt wird und so eine höhere Turbinenleistung, höheren Pumpendruck und damit höheren Brennkammerdruck ermöglicht

## Patentansprüche

1. Einrichtung zur Treibstoffzufuhr für ein Raketentriebwerk mit einem ersten (6a) und zumindest einem zweiten (7a) Treibstoff-Kreislauf, wobei jeder Treibstoff mittels einer Pumpe (12, 29) auf ein erhöhtes Energieniveau gebracht und über einen Einspritzkopf (32) mit Einspritzelementen (33) der Verbrennung zugeführt wird, wobei der erste Treibstoff in einer Schubkammerwand (17) verlaufenden Kühlkanälen (16) erwärmt wird, bevor der Treibstoff der Verbrennung zugeführt wird, und wobei der erste Treibstoff anschließend zumindest den den Pumpen (12, 29) zugeordneten Turbinen (24, 28) zugeführt wird, wobei ein Wärmetauscher (100) vorgesehen ist, in dem der von den Turbinen (24, 28) kommende Treibstoff mit einem von einer Pumpe (12, 29) kommenden Treibstoff in Wärmeaustausch steht, **dadurch gekennzeichnet, daß** der Wärmetauscher (100) am Einspritzkopf (32) angeordnet ist oder mit dem Einspritzkopf (32) zu einer Einheit integriert ist.

2. Einrichtung zur Treibstoffzufuhr nach dem Anspruch 1, **dadurch gekennzeichnet, daß** in dem Wärmetauscher (100) zwei Zustände desselben Treibstoffs miteinander im Wärmeaustausch stehen.

3. Einrichtung zur Treibstoffzufuhr nach einem der voranstehenden Ansprüche, **dadurch gekennzeichnet, daß** der von den Kühlkanälen (16) kommende Treibstoff Verbraucher (24, 28) betreibt, bevor er dem Wärmetauscher (100) zugeführt wird.

4. Wärmetauscher zur Verwendung in einer Einrichtung zur Treibstoffzufuhr für ein Raketentriebwerk nach dem Anspruch 1, **dadurch gekennzeichnet, daß** der Wärmetauscher (100) eine erste (101), eine zweite (107) und eine dritte (34) Eintrittsleitung sowie eine erste (15b) und zumindest eine zweite (109, 153, 154) Austrittsleitung umfaßt, wobei die erste Eintrittsleitung (101) in einen ersten Wärmetauscherraum (103) führt, der wärmeleitend in Verbindung mit einem zweiten Wärmetauscherraum (111) steht, und der Treibstoff von dem ersten Wärmetauscherraum (103) über die erste Austrittsleitung (15b) zu den Kühlkanälen (16) gelangt, wobei bereits erwärmter Treibstoff über zumindest eine Eintrittsleitung (107) in den zweiten Wärmetauscherraum (111) gelangt, der zumindest über die zweite Austrittsleitung (109, 153) mit dem Einspritzkopf (32) in Verbindung steht.

5. Wärmetauscher nach dem Anspruch 4, **dadurch gekennzeichnet, daß** der erste Wärmetauscherraum (103) mit zumindest einem Wärmetauschfinger (143) in Verbindung steht, der zumindest teilweise in die Brennkammer (19) hineinragt und dessen Abfluß mit der ersten Austrittsleitung in Vebindung steht.

6. Wärmetauscher nach Anspruch 1, **dadurch gekennzeichnet, daß** der Wärmetauscher (100) einen Wärmetauscherraum (151) für den zweiten Treibstoff höherer Temperatur hat, der mit dem Wärmetauscherraum (103) des Treibstoffs geringerer Temperatur in Wärmetausch steht.

7. Wärmetauscher nach den Ansprüchen 4 bis 6, **dadurch gekennzeichnet, daß** der erste Wärmetauscher-Raum (103) von einem ersten Teilraum (141) und einem zweiten Teilraum (142) gebildet ist, die über eine Verbindungsleitung (147, 145) in Verbindung stehen,
wobei der zweite Wärmetauscherraum (111) über Verbindungsleitungen (153) mit der Brennkammer (19) in Verbindung steht und der Wärmetauscherraum (151) im Bereich zwischen dem ersten Teilraum (141) und dem zweiten Teilraum (142) des ersten Wärmetauscherraums (103) gelegen ist und über Verbindungsleitungen (154) mit der Brennkammer (19) in Verbindung steht.

8. Wärmetauscher nach dem Anspruch 7, **dadurch gekennzeichnet, daß** dem Raum (151) der zweite Treibstoff zugeführt wird und dem Raum (152) des zweiten Wärmetauscherraums (111) der erste Treibstoff aus einem Bereich eingeleitet wird, der in Strömungsrichtung gesehen nach dem letzten Verbraucher gelegen ist.

## Claims

1. A device for supplying fuel for a rocket propulsion unit having first (6a) and at least one second (7a) fuel circuit, each of the fuels being brought by means of a pump (12, 29) to an increased energy level and being supplied for combustion via an injection head (32) having injection elements (33), the first fuel being heated in cooling channels (16) running in a thrust chamber wall (17) before the fuel is supplied for combustion, and the first fuel subsequently being supplied at least to the turbines (24, 28) associated with the pumps (12, 29), a heat exchanger (100) being provided, in which the fuel coming from the turbines (24, 28) is in heat exchange with a fuel coming from a pump (12, 29), **characterised in that** the heat exchanger (100) is arranged at the injection head (32) or is integrated with the injection head (32) to form a unit.

2. A device for supplying fuel according to claim 1, **characterised in that** in the heat exchanger (100) two states of the same fuel are in heat exchange with one another.

3. A device for supplying fuel according to one of the preceding claims, **characterised in that** the fuel coming from the cooling channels (16) operates loads (24, 28) before it is supplied to the heat exchanger (100).

4. Heat exchanger for use in a device for supplying fuel for a rocket propulsion unit according to claim 1, **characterised in that** the heat exchanger (100) comprises a first (101), a second (107) and a third (34) inlet pipe and a first (15b) and at least a second (109, 153, 154) outlet pipe,
wherein the first inlet pipe (101) leads into a first heat exchanger space (103), which is in heat-conducting connection with a second heat exchanger space (111), and the fuel arrives from the first heat exchanger space (103) via the first outlet pipe (15b) to the cooling channels (16),
wherein fuel already heated arrives via at least one inlet pipe (107) in the second heat exchanger space (111), which is connected at least via the second outlet pipe (109, 153) with the injection head (32).

5. Heat exchanger according to claim 4, **characterised in that** the first heat exchanger space (103) is connected with at least one heat exchange finger (143) which extends at least partially into the combustion chamber (19) and the discharge of which is connected with the first outlet pipe.

6. Heat exchanger according to claim 1, **characterised in that** the heat-exchanger (100) has a heat exchanger space (151) for the second fuel of higher temperature, which space is in heat exchange with the heat exchanger space (103) of the fuel of lower temperature.

7. Heat exchanger according to one of claims 4 to 6, **characterised in that**
the first heat exchanger space (103) is formed by a first partial space (141) and a second partial space (142) which are in connection by way of a connecting pipe (147, 145),
wherein the second heat exchanger space (111) is in connection with the combustion chamber (19) by way of connecting pipes (153) and the heat exchanger space (151) is located in the region between the first partial space (141) and the second partial space (142) of the first heat exchanger space (103), and is in connection with the combustion chamber (19) by way of connecting pipes (154).

8. Heat exchanger according to claim 7, **characterised in that** the second fuel is supplied to the space (151) and the first fuel is introduced to the space (152) of the second heat exchanger space (111) from a region which, viewed in the direction of flow, is located downstream of the last load.

## Revendications

1. Dispositif pour l'amenée de propergol pour un moteur-fusée, comportant un premier (6a) et au moins un deuxième (7a) circuit de propergol, dans lequel chaque propergol est porté au moyen d'une pompe (12, 29) à un niveau d'énergie accru et amené à la combustion par une tête d'injection (32) avec des éléments d'injection (33), le premier propergol est réchauffé dans des canaux de refroidissement (16) disposés dans une paroi (17) de chambre de poussée avant que le propergol soit amené à la combustion, et dans lequel le premier propergol est ensuite amené au moins aux turbines (24, 28) associées aux pompes (12, 29), un échangeur thermique (100) étant prévu pour que le propergol venant des turbines (24, 28) soit en échange thermique avec un propergol venant d'une pompe (12, 29),
**caractérisé en ce que**
l'échangeur thermique (100) est disposé sur la tête d'injection (32) ou est intégré en une unité avec la tête d'injection (32).

2. Dispositif pour l'amenée de propergol selon la revendication 1,
**caractérisé en ce que**
deux états du même propergol sont présents l'un avec l'autre dans l'échangeur thermique (100).

3. Dispositif pour l'amenée de propergol selon l'une des revendications précédentes,
**caractérisé en ce que**
le propergol venant des canaux de refroidissement (16) actionne des éléments consommateurs (24, 28) avant d'être amené à l'échangeur thermique (100).

4. Échangeur thermique pour utilisation dans un dispositif pour l'amenée de propergol pour un moteur-fusée selon la revendication 1,
**caractérisé en ce que**
- l'échangeur thermique (100) comprend une première (101), une deuxième (107) et une troisième (34) conduite d'entrée ainsi qu'une première (15b) et au moins une deuxième (109, 153, 154) conduite de sortie,
- la première conduite d'entrée (101) conduit la chaleur dans un premier compartiment (103) de l'échangeur thermique, en liaison avec un deuxième compartiment (111) de l'échangeur thermique, alors que le propergol arrive à partir du premier compartiment (103) de l'échangeur thermique, par la première conduite de sortie (15b), aux canaux de refroidissement (16), et
- le propergol réchauffé arrive, par au moins une conduite d'entrée (107), dans le deuxième compartiment (111) de l'échangeur thermique qui est en liaison, au moins par la deuxième conduite de sortie (109, 153), avec la tête d'injection (32).

5. Echangeur thermique selon la revendication 4,
**caractérisé en ce que**
le premier compartiment (103) de l'échangeur thermique est en liaison avec au moins un doigt (143) de l'échangeur thermique, lequel fait saillie au moins partiellement dans la chambre de combustion (19) et dont l'écoulement est en liaison avec la première conduite de sortie.

6. Echangeur thermique selon la revendication 1,
**caractérisé en ce que**
l'échangeur thermique (100) possède un compartiment (151) d'échange thermique pour le deuxième propergol de température plus élevée, lequel est en liaison dans l'échangeur thermique avec le compartiment (103) d'échangeur thermique pour le propergol de température plus faible.

7. Echangeur thermique selon les revendications 4 à 6,
**caractérisé en ce que**
- le premier compartiment (103) de l'échangeur thermique est formé par un premier compartiment partiel (141) et un deuxième compartiment partiel (142), qui sont en liaison par une conduite de liaison (147, 145),
- le deuxième compartiment (111) de l'échangeur thermique est en liaison, par des conduites de liaison (153), avec la chambre de combustion (19), et le compartiment (151) de l'échangeur thermique est situé dans la zone entre le premier compartiment partiel (141) et le deuxième compartiment partiel (142) du premier compartiment (103) de l'échangeur thermique et est en liaison, par des conduites de liaison (154), avec la chambre de combustion (19).

8. Echangeur thermique selon la revendication 7,
**caractérisé en ce que**
le deuxième propergol est amené au compartiment (151) et le premier propergol est conduit, à partir d'une zone qui, vue dans la direction de l'écoulement, est située en aval du dernier élément consommateur, au compartiment (152) du deuxième compartiment (111) de l'échangeur thermique.
